# EUROPÄISCHE PATENTSCHRIFT

(11) **EP 3 803 098 B1**
(45) Veröffentlichungstag und Bekanntmachung des Hinweises auf die Patenterteilung: **31.07.2024**
(21) Anmeldenummer: 19729487.9
(22) Anmeldetag: 04.06.2019
(51) Int. Cl.: F02M 61/16, B23K 26/382, F02M 61/18

(54) **VERFAHREN ZUM FERTIGEN EINER DÜSE ZUM EINSPRITZEN VON KRAFTSTOFF**
METHOD OF MANUFACTURING A NOZZLE FOR INJECTING FUEL
PROCÉDÉ DE FABRICATION D'UNE BUSE D'INJECTION DE CARBURANT

(30) Priorität: 08.06.2018 DE 102018113660
(43) Veröffentlichungstag der Anmeldung: 14.04.2021
(73) Patentinhaber: Liebherr-Components Deggendorf GmbH, 94469 Deggendorf (DE)
(72) Erfinder: PIRKL, Richard, 93055 Regensburg (DE); PREIS, Alexander, 94209 Regen (DE); LICHTINGER, Klaus, 94333 Geiselhöring (DE)
(74) Vertreter: Laufhütte, Dieter
(86) Internationale Anmeldenummer: PCT/EP2019/064464
(87) Internationale Veröffentlichungsnummer: WO 2019/234006

(56) Entgegenhaltungen:
- EP-A2- 1 312 796
- EP-B1- 1 312 796
- WO-A1-2014/174906
- DE-A1- 19 915 874
- FR-A- 1 190 361
- US-A- 6 070 813
- US-A1- 2005 205 693
- US-A1- 2016 341 165

## Beschreibung

Die vorliegende Erfindung betrifft ein Verfahren zum Fertigen einer Düse zum Einspritzen von Kraftstoff.

In Brennkraftmaschinen wie Dieselmotoren oder auch Benzinmotoren wird in der Regel über eine Düse Kraftstoff mit einer bestimmten Menge und für eine bestimmte Zeitdauer in einen Brennraum eingespritzt. Dabei ist es aufgrund der sehr geringen Einspritzdauern, die im Mikrosekunden-Bereich liegen, erforderlich, die Austrittsöffnung der Düse mit einer sehr hohen Frequenz zu öffnen bzw. zu schließen.

Da dem Fachmann das Funktionsprinzip einer Düse bekannt ist, wird nachfolgend nur kurz auf einige Aspekte eingegangen, die für das grundlegende Verständnis der Erfindung von Vorteil sind.

Eine Düse verfügt typischerweise über eine Düsennadel (auch: Injektornadel), die einen mit einem hohen Druck beaufschlagten Kraftstoff bei Freigeben eines Austrittslochs der Düse nach Außen treten lässt. Diese Düsennadel wirkt im Zusammenspiel mit dieser Austrittsöffnung wie ein Pfropfen, der bei einem Anheben ein Austreten des Kraftstoffs ermöglicht. Demnach ist es also erforderlich, diese Nadel in relativ kurzen Zeitabständen anzuheben und nach einer kurzen Zeit erneut in die Austrittsöffnung zurückgleiten zu lassen. Dabei können hydraulische Servoventile verwendet werden, die das Auslösen dieser Bewegung ansteuern. So gelingt es, die erforderliche Kraftstoffmenge zu den gewünschten Zeitpunkten in den Brennraum zu fördern. Dabei ist es nicht unbedingt erforderlich, dass die Düsennadel das Austrittsloch direkt verschließt, sondern es kann auch lediglich der aus dem Austrittsloch auszuleitende Kraftstofffluss mittels der Düsennadel unterbrochen werden, bspw. durch ein dichtendes Aufsetzen auf einer Sitzfläche der Düse.

Aus dem Stand der Technik ist bekannt, die sehr kleinen Bohrungen der Spritzlöcher mit einem Erodierprozess zu fertigen.

Dabei haben weitergehende Untersuchungen gezeigt, dass die Oberflächenbeschaffenheit (insbesondere die Rauheit) von Düsen-Spritzlöchern eine große Auswirkung auf das Emmissionsverhalten der mit der Düse zusammenwirkenden Brennkraftmaschine hat. Sehr glatte Löcher haben einen Vorteil und liefern einen bedeutenden Beitrag zu geringeren Emmisionswerten. Daher werden die typischerweise mit einem Erodierprozess gefertigten Spritzlöcher hydroerosiv verrundet, bei der eine mit Schleifpartikeln versetzte abrasive Flüssigkeit unter hohem Druck (bis zu 120 bar) durch die Spritzlöcher gepumpt wird, so dass eine gewisse Glättung der erodierten Spritzlöcher erreicht wird.

Aus den vorgenannten Gründen gibt es seit langem Bestrebungen, die Spritzlöcher mittels Laserbohrung zu erzeugen, da dies zu einer deutlich glatteren Oberfläche als der Erodierprozess mit anschließendem hydroerosiven Verrunden führt. Weitere Vorteile sind dabei eine schnelle Taktzeit, kleinere Bohrungsdruchmesser, ein geringerer Wärmeeintrag in Oberflächen, kein Verbrauchsmaterial sowie eine bessere Reproduzierbarkeit der Löcher.

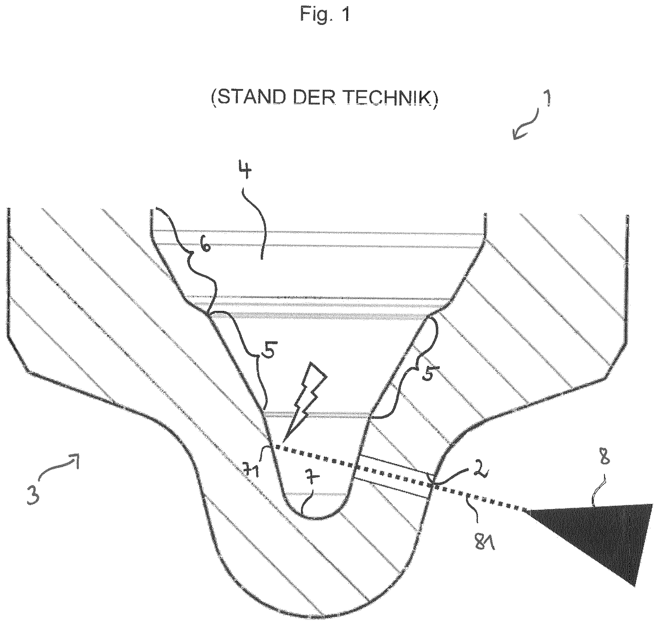

Problematisch hierbei ist, dass beim Laserbohren des Spritzlochs der Laser unmittelbar nach Eindringen in das Sackloch einer Düse zu deaktivieren ist, da ansonsten die gegenüberliegende Sacklochwand oder der gegenüberliegende Sitzbereich vom Laser beschädigt wird. Eine grafische Darstellung dieser Situation findet sich in der Fig. 1. Unter Umständen kann es dabei sogar zu einem Durchbohren der gegenüberliegenden Wand kommen.

Außerdem kann es erforderlich sein, das Spritzloch so zu fertigen, dass der Laser erst das komplette Loch durchdringt uns es anschließend durch eine kreis- bzw. schneckenförmige Bewegung vergrößert.

Da es jedoch regelmäßig nicht gelingt, den Laser ausreichend schnell und präzise zu deaktivieren, ist es erforderlich, die gegenüberliegende Sacklochwand abzuschirmen, um Beschädigungen durch den Laser zu verhindern. Dieser Vorgang wird in Fachkreisen auch "Back-Wall-Protection" genannt.

Die EP 1 312 796 A2 zeigt eine aus dem Stand der Technik bekannte Kraftstoffeinspritzdüse, die sämtliche Merkmale aus dem Oberbegriff des Anspruchs 1 aufweist.

Die DE 199 15 874 A1 offenbart eine Kraftstoffeinspritzdüse gemäß einer zweiteiligen Bauart, bei der der Spitzenbereich separat gefertigt ist.

Die US 2005/0205693 A1 zeigt ein Einspritzventil bei dem ein Spritzloch im Sitzbereich angeordnet ist.

Auch die FR 1 190 361 A, WO 2014/174906 A und die US 2016/341165 A1 zeigen jeweils eine Kraftstoff Einspritzdüse, die die Merkmale aus dem Oberbegriff des Anspruchs 1 besitzt.

Es ist das Ziel der vorliegenden Erfindung, eine Düse mit einem Spritzloch vorzusehen, der die oben aufgeführten Nachteile nicht aufweist. Dies gelingt mit einem Verfahren zum fertigen einer Düse, das sämtliche Merkmale des Anspruchs 1 enthält. Vorteilhafte Ausführungen der Erfindung sind in den abhängigen Ansprüchen aufgeführt.

Eine durch das erfindungsgemäße Verfahren gefertigte Düse zum Einspritzen von Kraftstoff umfasst dabei unter anderem ein Spritzloch im Bereich einer Düsenspitze zum Ausleiten von Kraftstoff aus der Düse, und ein Aufnahmeloch zum Aufnehmen einer Düsennadel, wobei das Aufnahmeloch einen Sitzbereich zum dichtenden Abschließen mit einer Düsennadel aufweist, um in Abhängigkeit einer Position der Düsennadel eine Kraftstoffzufuhr zu dem Spritzloch zu ermöglichen. Die Düse zeichnet sich dadurch aus, dass die Längsachse des Spritzlochs auf einen Bereich des Aufnahmelochs gerichtet ist, der sich an der Seite des Sitzbereichs anschließt, die von der Düsenspitze abgewandt ist.

Dadurch kann bei einem Bohren des Spritzlochs mittels Laser eine Beschädigung des dem Spritzloch gegenüberliegenden Sitzbereichs oder Sacklochabschnitts nicht mehr erfolgen. Diese funktionsrelevanten Bereiche (Sitzbereich und/oder Sackloch) bleiben damit schadenfrei, wodurch der Gesamtausschuss der Düse auch bei einer Laserbohrung des Spritzlochs deutlich reduziert werden kann.

Die Entfernung zur gegenüberliegenden Fläche ist größer, wodurch der Laser seine Energie bis zum Auftreffen auf die Wand abbauen kann. Sollte es dennoch zu Beschädigungen kommen, so liegen diese außerhalb des funktionsrelevanten Bereichs der Düse. Zudem ist denkbar, dass durch ein entsprechendes Aufmaß in dem Bereich, der sich an der Seite des Sitzbereichs anschließt, die von der Düsenspitze abgewandt ist, durch ein dem Laserbohren des Spritzlochs nachfolgendes Bohren oder Schleifen eine etwaige Beschädigung entfernt werden kann.

Nach einer optionalen Modifikation der Erfindung kann vorgesehen sein, dass die Längsachse der Bohrachse des Spritzlochs entspricht.

Zudem kann nach der Erfindung vorgesehen sein, dass an der Seite des Sitzbereichs, die der Düsenspitze zugewandt ist, ein Sackloch vorgesehen ist. Damit schließt sich auf der einen Seite des Sitzbereichs das Sackloch und auf der anderen Seite derjenige Bereich an, auf den die Bohrachse des Spritzlochs gerichtet ist.

Dem Fachmann ist klar, dass es unterschiedliche Ausformungen der Spitze der Düse (auch: Injektor) geben kann. Bei einer sogenannten Sitzlochdüse werden die Düsenlöcher direkt von dem Ventilglied (Düsennadel) verschlossen.

Bei der Sacklochdüse ist unterhalb des Düsensitzes ein Restvolumen (im Sackloch) vorgesehen, in dem ein Rest Kraftstoff verbleibt, der nicht durch die Düsenlöcher eingespritzt wurde. Dies kann eine erhöhte Emission an unverbrannten Kraftstoffelementen im Abgas und eine höhere Neigung der Düse zum Verkoken zur Folge haben. Allerdings kann man durch ein den Düsenlöchern vorgelagertes Mischvolumen günstigere Strömungsverhältnisse erreichen. Die Erfindung beschränkt sich nicht auf eine der beiden vorgenannten Düsenformen, sondern ist bei beiden Typen vorteilhaft.

Nach der Erfindung ist vorgesehen, dass das Spritzloch ein mittels Laser gebohrtes Loch ist. Ein mittels Laser gebohrtes Spritzloch ist für den Fachmann leicht zu erkennen, da es eine deutlich glattere Oberfläche aufweist als ein herkömmlich gebohrtes und hydroerosiv verrundetes Loch.

Weiter kann nach einer vorteilhaften Modifikation vorgesehen sein, dass der Sitzbereich ein etwa trichterförmig ausgestalteter Bereich ist, der in Richtung der Spitze der Düse zuläuft, und/oder dass der Sitzbereich etwa der Mantelfläche eines Kegelstumpfs entspricht, der in Richtung der Spitze der Düse zuläuft.

Es kann vorgesehen sein, dass sich an der zur Düsenspitze gewandten Seite des Sitzbereichs ein Sackloch anschließt, das in etwa eine Sackform hat und/oder sich an die untere Umfangskante des Sitzbereichs anschließt. Dem Fachmann ist klar, dass das Sackloch auch andere Formen annehmen kann, die ebenfalls von der Erfindung umfasst sind. Bspw. eine konische oder eine zylindrische Form sind dabei für das Sackloch denkbar.

Nach der Erfindung ist vorgesehen, dass das Spritzloch in das Aufnahmeloch der Düse auf Höhe des Sitzbereichs eintritt. In andern Worten liegt die innere Öffnung des Spritzlochs im Sitzbereich der Düse.

Dadurch lässt sich ein zur Normalenebene der Längsausdehnung der Düse geringer Winkel erreichen und gleichzeitig das gewünschte Ausrichten der Bohrachse des Spritzlochs auf den gewünschten Bereich erreichen. Ein geringer Winkel kann unter Umständen beim Ausleiten von Kraftstoff aus der Düse von Vorteil sein.

Nach einem illustrativen Beispiel kann vorgesehen sein, dass das Spritzloch in das Aufnahmeloch der Düse auf Höhe des Sacklochs eintritt. In anderen Worten liegt die innere Öffnung des Spritzlochs im Sackloch der Düse.

Nach der Erfindung ist vorgesehen, dass die Längsachse des Spritzlochs einen Winkel zur Normalenebene der Längsachse der Düse einschließt, der mindestens 45° oder noch besser mindestens 50° beträgt.

Die Erfindung betrifft demnach ein Verfahren zum Fertigen einer Düse nach einem der vorhergehenden ausgeführten Aspekte, wobei in dem Verfahren ein Spritzloch der Düse zum Ausgeben von Kraftstoff mittels Laserbohrung erzeugt wird, und ein der Düse entlang seiner Längsausdehnung aushöhlendes Aufnahmeloch zur Aufnahme einer Düsennadel gefertigt wird, wobei das Aufnahmeloch derart gefertigt wird, dass es einen Sitzbereich zum dichtenden Abschließen mit einer Düsennadel aufweist, um in Abhängigkeit einer Position der Düsennadel eine Kraftstoffzufuhr zu dem Spritzloch zu ermöglichen. Das Verfahren ist dadurch gekennzeichnet, dass beim Bohren des Spritzlochs mit einem Laser, die Bohrachse des Lasers auf einen Bereich des Aufnahmelochs gerichtet wird, der sich an der Seite des Sitzbereichs anschließt, die von der Düsenspitze abgewandt ist.

Bei einer optionalen Fortbildung des Verfahrens wird beim Bohren die Bohrachse so ausgerichtet, dass die Längsachse des Spritzlochs einen Winkel zur Normalenebene der Längsachse der Düse einschließt, der mindestens 45° oder noch besser mindestens 50° beträgt.

Weitere Einzelheiten, Merkmale und Vorteile der Erfindung werden anhand der nachfolgenden Figurenbeschreibung ersichtlich. Dabei zeigen:
- Fig. 1:: eine Schnittansicht einer Düsenspitze während eines Fertigungsverfahrens nach dem Stand der Technik, und
- Fig. 2:: eine Schnittansicht einer Düsenspitze einer erfindungsgemäßen Düse bei einem Laserbohren des Spritzlochs.

Fig. 1 zeigt eine Schnittansicht einer Spitze einer Düse 1 zum Einspritzen von Kraftstoff.

Wie bereits im einleitenden Teil der Beschreibung erläutert, ist es nach dem Stand der Technik üblich, das Spritzloch 2 mit Hilfe eines Lasers 8 zu bohren. Dabei kann bspw. nach Durchtritt des Laserstrahls 81 der gegenüberliegende Bereich 71 des Sacklochs 7 beschädigt werden. Grafisch dargestellt ist diese Beschädigung mit dem Blitz-Symbol. Eine solche Beschädigung gilt es unbedingt zu vermeiden, da ansonsten die Düse unbrauchbar wird. An das Sackloch 7 schließt sich dabei ein etwa trichterförmiger Bereich 5 an, der sich von der Spitze 3 der Düse 1 weg nach oben hin aufweitet. Der Bereich 5 kann aber auch zylindrisch geformt sein und ist nicht auf seine Trichterform beschränkt. Dies ist der Sitzbereich 5 der Düsennadel, der im Zusammenspiel mit der Düsennadel eine Fluidverbindung von unter hohem Druck stehenden Kraftstoff (und damit das Ausgeben von Kraftstoff durch die Düse) unterbrechen oder zulassen kann.

Oberhalb des Sitzbereichs 5, also an der zur Spitze 3 der Düse 1 abgewandten Seite schließt sich die Düsen-Mittenbohrung 6 an.

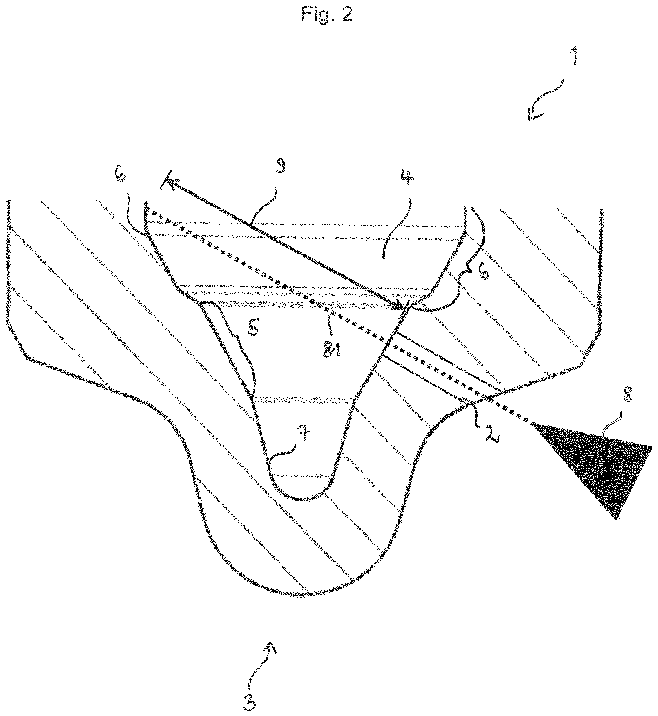

Fig. 2 zeigt die erfindungsgemäße Düse während eines Fertigungsvorgangs. Dabei wird das mindestens eine Spritzloch 2 durch Laserbohren gefertigt. Das durch den Laser 8 erzeugte Spritzloch 2 durchbricht dabei das Aufnahmeloch 4 im Sitzbereich 5. Die Bohrachse ist dabei so ausgerichtet, dass der in das Aufnahmeloch durchtretende Laserstrahl 81, der notwendigerweise auf der Bohrachse liegt, auf einem Bereich im Aufnahmeloch 4 gerichtet ist, der sich an der Seite des Sitzbereichs 5 anschließt, die von der Düsenspitze 3 abgewandt ist.

Dies bringt zwei Vorteile mit sich. Zum einen wird bei einem so ausgerichteten Laserstrahl 81 auch nach einem Durchbrechen in das Aufnahmeloch 4 kein funktionsrelevanter Bereich (Sitzbereich 5 oder Sackloch 7) beschädigt. Zum anderen gibt es aufgrund des größeren Abstands (gekennzeichnet mit Bezugszeichen 9) zwischen der inneren Öffnung des Spritzlochs 2 und der vom Laserstrahl 81 nach Durchbrechen in das Aufnahmeloch 4 angegriffenen Fläche 6 einen größeren Energieabbau des Laserstrahls 81 bis zum Auftreffen auf die anvisierte Stelle. Etwaige Beschädigungen werden somit weniger ausgeprägt auftreten. Zudem treten Beschädigungen nur in einem Bereich auf, der für die Funktion oder Leistungsfähigkeit der Düse nicht relevant ist.

Weiter erkennt man in der Fig. 2 der Erfindung, dass die Neigung des Spritzlochs 2 größer als diejenige Neigung des Spritzlochs aus der vorbekannten Düse (dargestellt in Fig. 1) ist. Gemäß der Erfindung ist es von Vorteil, wenn die Neigung einen Winkel mit der Normalenebene der Längsrichtung der Düse 1 aufweist, der 15° übersteigt, oder so wie in der Fig. dargestellt, bei 27° liegt.

## Patentansprüche

1. Verfahren zum Fertigen einer Düse (1) zum Einspritzen von Kraftstoff, die ein Spritzloch (2) im Bereich einer Düsenspitze (3) zum Ausleiten von Kraftstoff aus der Düse (1) umfasst, wobei in dem Verfahren:
ein die Düse (1) entlang seiner Längsausdehnung aushöhlendes Aufnahmeloch (4) zur Aufnahme einer Düsennadel gefertigt wird, wobei
das Aufnahmeloch (4) derart gefertigt wird, dass es einen Sitzbereich (5) zum dichtenden Abschließen mit einer Düsennadel aufweist, um in Abhängigkeit einer Position der Düsennadel eine Kraftstoffzufuhr zu dem Spritzloch (2) zu ermöglichen,
wobei
das Spritzloch (2) der Düse (1) zum Ausgeben von Kraftstoff mittels Laserbohrung erzeugt wird,
**dadurch gekennzeichnet, dass** das
Spritzloch (2) in das Aufnahmeloch (4) der Düse (1) auf Höhe des Sitzbereichs (5) oder im Sitzbereich (5) eintritt, und
beim Bohren des Spritzlochs (2) mit einem Laser, die Bohrachse des Lasers auf einen Bereich (6) des Aufnahmelochs (4) gerichtet wird, der sich an der Seite des Sitzbereichs (5) anschließt, die von der Düsenspitze (3) abgewandt ist, wobei
die Längsachse des Spritzlochs (2) einen Winkel zur Normalenebene der Längsachse der Düse (1) einschließt, der mindestens 45°, vorzugsweise mindestens 50° beträgt.

2. Verfahren nach dem vorhergehenden Anspruch 1, wobei bei der Düse (1) an der Seite des Sitzbereichs (5), die der Düsenspitze (3) zugewandt ist, ein Sackloch vorgesehen ist.

3. Verfahren nach einem der vorhergehenden Ansprüche, wobei bei der Düse (1) der Sitzbereich (5) ein etwa trichterförmig oder zylinderförmig ausgestalteter Bereich ist, der in Richtung der Spitze (3) der Düse (1) zuläuft, und/oder etwa der Mantelfläche eines Kegelstumpfs entspricht, der in Richtung der Spitze (3) der Düse (1) zuläuft.

## Claims

1. Method for manufacturing a nozzle (1) for injecting fuel, comprising a hole (2) in the area of a nozzle tip (3) for discharging fuel from the nozzle (1), wherein in the method:
a reception hole (4) hollowing out the nozzle (1) along its longitudinal extent is produced for receiving a nozzle needle, the reception hole (4) being produced in such a way that it comprises a seat region (5) for sealing closure with a nozzle needle in order to enable a fuel supply to the injection hole (2) as a function of a position of the nozzle needle,
wherein the hole (2) of the nozzle for discharging fuel is a hole drilled by means of laser,
**characterized in that**
the injection hole (2) enters the reception hole (4) of the nozzle (1) at the level of the seat region (5) or in the seat region (5), and
when drilling the injection hole (2) with a laser, the drilling axis of the laser is directed towards a region (6) of the reception hole (4) which adjoins the side of the seat region (5) which faces away from the nozzle tip (3), wherein
the longitudinal axis of the injection hole (2) includes an angle to the normal plane of the longitudinal axis of the nozzle (1) which is at least 45°, preferably at least 50°.

2. Method according to the preceding claim 1, wherein a blind hole is provided in the nozzle (1) on the side of the seat region (5) facing the nozzle tip (3).

3. Method according to any one of the preceding claims, wherein at the nozzle (1) the seat region (5) is an approximately funnel-shaped or cylindrical region that converges in the direction of the tip (3) of the nozzle (1) and/or approximately corresponds to the jacket surface of a truncated cone that converges in the direction of the tip (3) of the nozzle (1).

## Revendications

1. Procédé de fabrication d'une buse (1) pour l'injection de carburant, qui comprend un trou d'injection (2) dans la zone d'une pointe de buse (3) pour l'évacuation du carburant hors de la buse (1), dans le procédé :
un trou de réception (4) creusant la buse (1) le long de son extension longitudinale pour recevoir une aiguille de buse étant fabriqué,
le trou de réception (4) étant fabriqué de telle sorte qu'il présente une zone de siège (5) pour se fermer de manière étanche avec une aiguille de buse afin de permettre une amenée de carburant vers le trou d'injection (2) en fonction d'une position de l'aiguille de buse,
le trou d'injection (2) de la buse (1) pour la distribution de carburant étant produit au moyen d'un perçage au laser,
**caractérisé en ce que**
le trou d'injection (2) pénètre dans le trou de réception (4) de la buse (1) au niveau de la zone de siège (5) ou dans la zone de siège (5), et
lors du perçage du trou d'injection (2) avec un laser, l'axe de perçage du laser est dirigé vers une zone (6) du trou de réception (4) qui se raccorde au côté de la zone de siège (5) qui est détourné de la pointe de buse (3),
l'axe longitudinal du trou d'injection (2) formant un angle avec le plan normal de l'axe longitudinal de la buse (1) qui est d'au moins 45°, de préférence d'au moins 50°.

2. Procédé selon la revendication 1 précédente, dans lequel un trou borgne est prévu dans la buse (1) sur le côté de la zone de siège (5) qui est tourné vers la pointe de buse (3).

3. Procédé selon l'une quelconque des revendications précédentes, dans lequel la zone de siège (5) de la buse (1) est une zone de forme approximativement cylindrique ou en forme d'entonnoir, qui se rétrécit en direction de la pointe (3) de la buse (1), et/ou correspond approximativement à la surface d'enveloppe d'un cône tronqué, qui se rétrécit en direction de la pointe (3) de la buse (1).
